(19) Europäisches Patentamt
European Patent Office
Office européen des brevets

(11) EP 2 053 053 A1

(12) EUROPÄISCHE PATENTANMELDUNG

(43) Veröffentlichungstag:
**29.04.2009 Patentblatt 2009/18**

(51) Int Cl.:
***C07F 9/6574*** *(2006.01)*

(21) Anmeldenummer: **07021015.8**

(22) Anmeldetag: **26.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **EMS-PATENT AG**
**7013 Domat/Ems (CH)**

(72) Erfinder:
- **Kaplan, Andreas, Dr. rer.nat.**
  **7000 Chur (CH)**
- **Gisler, Rene**
  **7000 Chur (CH)**

(74) Vertreter: **Pfenning, Meinig & Partner GbR**
**Patent- und Rechtsanwälte**
**Theresienhöhe 13**
**80339 München (DE)**

(54) **Verfahren zur kontinuierlichen Herstellung einer Organophosphorverbindung sowie dessen Verwendung**

(57) Die vorliegende Erfindung betrifft Organophosphorverbindungen, insbesondere 9,10-Dihydro-9-oxa-10-phosphaphenanthren-10-oxid (DOPO) bzw. deren Derivate. Diese sind im Stand der Technik seit vielen Jahren bekannt und werden bevorzugt als Additive für Polymere eingesetzt. Insbesondere die Verwendung von DOPO und dessen Derivate als Flammschutzmittel für Polymere, wie z.B. Polyester, Polyamide, Epoxidharze, hat sich als vorteilhaft herausgestellt.

EP 2 053 053 A1

## Beschreibung

Organophosphorverbindungen, insbesondere 9,10-Dihydro-9-oxa-10-phosphaphenanthren-10-oxid (DOPO) bzw. deren Derivate sind im Stand der Technik seit vielen Jahren bekannt und werden bevorzugt als Additive für Polymere eingesetzt. Insbesondere die Verwendung von DOPO und dessen Derivate als Flammschutzmittel für Polymere, wie z.B. Polyester, Polyamide, Epoxidharze, hat sich als vorteilhaft herausgestellt.

So beschreibt die JP 5017979 ein Verfahren zur Herstellung von DOPO und dessen Verwendung als Additiv in Polymeren. Weiterhin ist in der JP 59-222496 aus dem Jahre 1984 ein Verfahren zur Herstellung von DOPO bekannt und dessen Verwendung als Flammschutzmittel.

Aufgrund der steigenden Bedeutung von DOPO bzw. seinen Derivaten als Additiv, insbesondere als halogenfreies Flammschutzmittel für Polymere, besteht ein großes Interesse an einem verfahrenstechnisch einfachen, ökonomischen und sicheren Herstellungsverfahren für DOPO und dessen Derivate. Schwierigkeiten bei der Herstellung von DOPO bereiten phosphorhaltige Nebenprodukte wie phosphorige Säure, Phosphine, auch Phosphane genannt und weißen Phosphor. Diese bei der Herstellung von DOPO und dessen Derivate anfallenden Verunreinigungen erfordern aufwändige Reinigungen der Anlagen und stellen eine Gefährdung des Bedien- und Reinigungspersonals dar.

Im Stand der Technik sind bisher diskontinuierliche Herstellungsverfahren, sogenannte Batch-Herstellungsverfahren für DOPO bekannt geworden. Ein derartiges Batch-Verfahren ist z.B. in der JP 5017979 beschrieben.

Ausgehend hiervon ist es nun die Aufgabe der vorliegenden Erfindung, ein neues kontinuierliches Herstellungsverfahren von DOPO und dessen Derivaten anzugeben. Das kontinuierliche Herstellungsverfahren soll eine einfache und sichere Verfahrensweise ermöglichen und Produkte in konstanter Qualität, hoher Reinheit und mit hoher Ausbeute liefern.

Diese Aufgabe wird durch die kennzeichnenden Merkmale des Patentanspruches 1 gelöst. Die Unteransprüche zeigen vorteilhafte Weiterbildungen auf.

Das erfindungsgemäße Verfahren zeichnet sich somit dadurch aus, dass mindestens die folgenden Stufen durchlaufen werden:

Stufe 1 Veresterung des O-Phenylphenols der allgemeinen Formel IV mit einem Überschuss an $PX_3$ der allgemeinen Formel (III)

Stufe 2 Cyclisierung des Produkts aus der Stufe 1 mit einem Katalysator, und

Stufe 3 Hydrolyse des Produkts aus der Stufe 2.

Beim erfindungsgemäßen Verfahren werden bevorzugt in einem kontinuierlichen Prozess unter Schutzgas nacheinander die folgenden Stufen durchgeführt (siehe hierzu Figur 3):

Stufe 1: Veresterung des ortho-Phenylphenols (o-Phenylphenol) der allgemeinen Formel (IV),

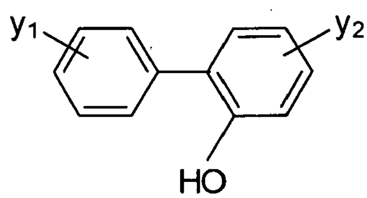

(IV)

worin $y_1$ und $y_2$, die gleich oder unter-schiedlich sein können, Wasserstoff- oder Halogenatome, Alkylgruppen mit $C_1$ bis $C_{18}$, Alkoxygruppen mit $C_1$ bis $C_{18}$, Arylgruppen, Aryloxygruppen, Acylgruppen, Nitrogruppen, Cyanogruppen oder Sulfonsäuregruppen sein können, wobei die Reste $y_1$ und $y_2$ auch zusammen mit dem Biphenylring einen Phenanthrenring bilden können, mit einem Überschuss an Phosphortrihalogenid der allgemeinen Formel (III)

$$PX_3 \qquad (III),$$

worin X für ein Halogen steht,

Stufe 2: Cyclisierung des Zwischenprodukts aus der Stufe 1 in Gegenwart eines Katalysators und Rückführung

des nicht abreagierten Phosphortrihalogenids,

Stufe 2.1: Destillation des Zwischenprodukts aus der Stufe 2, wobei der Rückstand entweder in die Stufe 1 oder in die Stufe 2 zurückgeführt wird,

Stufe 3: Hydrolyse des Destillats aus der Stufe 2 zum Zwischenprodukt der allgemeinen Formel (II )

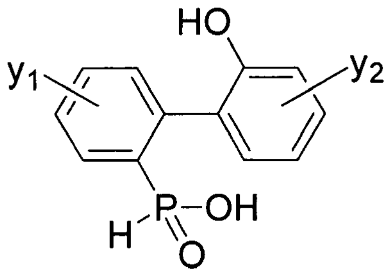

(II)

worin die Reste $y_1$ und $y_2$ die vorstehend genannte Bedeutung besitzen,

Stufe 3.1: Austrag des Zwischenprodukts der allgemeinen Formel (II) in Form von Schuppen, und

Stufe 4: Trocknung und Cyclisierung des Zwischenprodukts (II) zum Endprodukt der allgemeinen Formel (I)

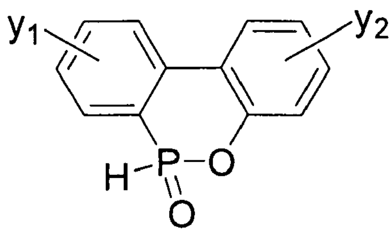

(I)

Nachfolgend ist eine detaillierte Beschreibung der einzelnen Stufen der bevorzugten Ausführungsform angegeben.

Stufe 1:

Die Umsetzung findet bei der Temperatur des am Rückfluss siedenden $PX_3$ unter atmosphärischem Druck statt.

Beim erfindungsgemäßen Verfahren hat es sich als besonders vorteilhaft herausgestellt, wenn in der Stufe 1 mit einem Überschuss an $PX_3$ gearbeitet wird. Der Überschuss des Phosphortrihalogenides kann sich dabei im Bereich von 1,1 bis 3 Mol $PX_3$, bevorzugt 1,1 bis 2 Mol, besonders bevorzugt 1,1 bis 1,8 Mol, bezogen auf 1 Mol des o-Phenylphenols der allgemeinen Formel (IV) belaufen. Der Überschuss am Phosphortrihalogenid (allgemeine Formel III) ist wichtig, um das Gleichgewicht der Veresterungsreaktion zum Monoester hin zu verschieben.

Bevorzugt wird beim erfindungsgemäßen Verfahren als Phosphortrihalogenid Phosphortrichlorid ($PCl_3$) oder Phosphortribromid ($PBr_3$) verwendet, besonders bevorzugt ist Phosphortrichlorid ($PCl_3$). Die Reaktionstemperatur liegt bevorzugt bei 70 bis 185 °C, besonders bevorzugt bei 70 bis 85 °C.

Es hat sich weiterhin als günstig herausgestellt, wenn der Katalysator für die Cyclisierung (Stufe 2) bereits in der Stufe 1 mit dem Phosphortrihalogenid, den Edukten, d.h. dem o-Phenylphenol der allgemeinen Formel (IV), zugegeben wird. Das erfindungsgemäße Verfahren umfasst dabei aber auch die Ausführungsform, bei dem der Katalysator nur in der Stufe 2, d.h. während der Cyclisierung, zugesetzt wird, oder auch während der Stufen 1 und der 2.

Stufe 2:

Die Cyclisierung in der Stufe 2 wird beim erfindungsgemäßen Verfahren bevorzugt bei atmosphärischem Druck und einer Temperatur > 140 °C, bevorzugt 140 bis 200 °C, besonders bevorzugt 155 bis 180 °C durchgeführt. Bei der Cyclisierung ist insbesondere zu beachten, dass hier zur Verschiebung des Gleichgewichts in Richtung des Monoesters der entstehende Halogenwasserstoff (HX) aus dem System entfernt werden muss. Das aufgrund der Reaktionstemperatur absiedende $PX_3$ wird kondensiert und in die Stufe 1 oder an den Ausgangspunkt der Stufe 2 zurückgeführt.

Die Menge des einzusetzenden Katalysators wird anhand der eingesetzten Menge o-Phenylphenol bestimmt. Üblicherweise wird der Katalysator in einer Menge von 0,01 bis 0,06 Mol, bevorzugt 0,02 bis 0,04 Mol, bezogen auf 1 Mol des o-Phenylphenols, eingesetzt. Als Katalysator beim erfindungsgemäßen Verfahren können grundsätzlich alle Metalle der Gruppe I B des Periodensystems und deren Halogenide, Metalle der Gruppe II B und deren Halogenide, Metalle der Gruppe III A und deren Halogenide, Metalle der Gruppe III B und deren Halogenide, Metalle der Gruppe IV A und deren Halogenide, Metalle der Gruppe IV B und deren Halogenide sowie die Metalle der Eisengruppe und deren Halogenide eingesetzt werden. Spezifische Beispiele sind Kupfer, Kupfer(I)chlorid, Kupfer(II)chlorid, Zink, Zinkchlorid, Kadmiumchlorid, Aluminium, Aluminiumchlorid, Skandiumchlorid, Zinn, Zinn(II)chlorid, Zinn(IV)chlorid, Zirkonchlorid, Chromchlorid und Eisen(III)chlorid eingesetzt werden.

Bevorzugt als Katalysator beim erfindungsgemäßen Verfahren ist Zinkchlorid ($ZnCl_2$). Zinkchlorid selbst zeigt katalytische Wirkung. Im Reaktionsgemisch bildet sich bei Temperaturen über 140 °C eine katalytisch noch aktivere Spezies. Das Zinkchlorid löst sich dabei im Reaktionsgemisch.

Stufe 2.1:

Bei der an die Cyclisierung anschließenden Vakuumdestillation wird das cyclisierte Zwischenprodukt DOP-X (z.B. DOP-CL, Figur 2) als Destillat abgetrennt. Das DOP-X hat hier eine Reinheit von mindestens 90 Gew.-%. Die Vakuumdestillation erfolgt bei einer Temperatur von 130 bis 180 °C, bevorzugt 140 bis 170 °C, besonders bevorzugt 140 bis 160 °C und einem Druck von 0,5 bis 20 mbar, bevorzugt 1 bis 10 mbar, besonders bevorzugt 1 bis 5 mbar.

Für diesen Zweck besonders geeignet sind z.B. Dünnschichtverdampfer und Kurzwegdestillationsanlagen, da sie eine besonders schonende Destillation ermöglichen.

Der Rückstand der Destillation enthält den Katalysator, u.a. in Form katalytisch aktiver Spezies, z.B. Addukten, Diester und Spuren von Triestern, nicht abreagiertem OPP und Nebenprodukten.

Dieser Rückstand, inklusive des Katalysators bzw. der katalytisch aktiven Spezies, wird in Stufe 1 und/oder Stufe 2 zurückgeführt, wobei seine Temperatur nicht unter 80 °C, bevorzugt nicht unter 100 °C, besonders bevorzugt nicht unter 140 °C sinken darf.

Stufe 3:

Die Hydrolyse des Destillats (DOP-X) aus der Stufe 2.1 mit Wasser wird bei atmosphärischem Druck und bei Temperaturen von 80 bis 100 °C, bevorzugt 90 bis 100 °C, ganz besonders bevorzugt in siedendem Wasser durchgeführt. Hierbei wird soviel Wasser eingesetzt, dass sich ein zweiphasiges Gemisch ausbilden kann. Die untere Phase ist dabei das geschmolzene Produkt in der offenen Form der allgemeinen Formel (II) und die obere, wässerige Phase enthält das abgespaltene HX.

Stufe 3.1:

Der Austrag der Produktschmelze erfolgt mittels einer Schmelzepumpe durch eine Schlitzdüse auf ein Endlosband, wobei sie zu unregelmäßigen Platten erstarrt, die dann zu Schuppen gebrochen werden. Auch diese Stufe wird in einem geschlossenen System unter Schutzgasatmosphäre durchgeführt

Stufe 4:

Die Schuppen werden auf einem Bandtrockner bei 80 bis 105 °C, bevorzugt 90 bis 100 °C vorgetrocknet und im Vakuum bei 20 bis 100 mbar, bevorzugt 30 bis 50 mbar und 90 bis 100 °C zum Endprodukt der allgemeinen Formel (I) cyclisiert und getrocknet.

Der Ringschluss zum Endprodukt der allgemeinen Formel (I) kann auch im Anschluss an die Stufe 4 am geschmolzenen Produkt in der offenen Form der allgemeinen Formel (II) erfolgen.

Der Wassergehalt des Endprodukts beträgt maximal 0,2 Gew.-%, bevorzugt maximal 0,1 Gew.-%.

Die Reinheit des Endprodukts beträgt mindestens 90 Gew.-%, bevorzugt mindestens 95 Gew.-%, besonders bevorzugt mindestens 99 Gew.-%, ganz besonders bevorzugt mindestens 99,5 Gew.-%.

Der Halogengehalt des Endprodukts beträgt maximal 100 ppm, bevorzugt maximal 50 ppm, besonders bevorzugt maximal 30 ppm, ganz besonders bevorzugt maximal 25 ppm.

Der Gehalt an ortho-Phenylphenol beträgt maximal 0,5 Gew.-%, bevorzugt maximal 0,3 Gew.-%, besonders bevorzugt maximal 0,1 Gew.-%.

Im allgemeinen ist das Endprodukt des erfindungsgemäßen kontinuierlichen Verfahrens so rein, dass auf weitere Reinigungsschritte, verzichtet werden kann.

Sollte in Ausnahme Fällen doch eine zusätzliche Reinigung nötig sein, kann dies durch Umkristallisation, Rektifikation und/oder mehrfache Destillation erfolgen

Das in den Stufen 1 bis 3 entstehende HX wird, wie aus dem Stand der Technik bekannt, z.B. in einer Gaswäsche abgefangen oder auch mit Natronlauge neutralisiert. Das Abfangen in einer Gaswäsche hat dabei den Vorteil, dass die entstehende Säurelösung für andere Zwecke wiederverwendet werden kann.

Zwischen den einzelnen Stufen des erfindungsgemäßen Herstellungsverfahrens können Pufferbehälter installiert sein, um die Zwischenprodukte der einzelnen Verfahrensstufen bis zum Einfahren in die folgende Stufe unter Schutzgas zwischenzulagern.

Während des ganzen erfindungsgemäßen Herstellungsverfahrens wird kein organisches Lösungsmittel verwendet.

Das erfindungsgemäße kontinuierliche Herstellungsverfahren hat gegenüber dem diskontinuierlichen Batch-Verfahren bei gleicher Kapazität der Anlagen den Vorteil, dass sich aufgrund des kontinuierlichen Betriebs geringere Mengen an Material in der Anlage befinden und somit kleinere Masseströme bewältigt werden müssen. Dadurch kann auf Störungen schneller reagiert werden und auch das Risiko beim "Durchgehen" der Reaktion ist minimiert.

Außerdem herrschen in den einzelnen Stufen stationäre Bedingungen.

Natürlich kann auch im Batch-Verfahren mit Rückführung des Katalysators und des überschüssigen $PX_3$ gearbeitet werden.

Die Stufen 1 bis 2.1 sind extrem empfindlich auf den Eintrag von Feuchtigkeit, wobei schon die Luftfeuchtigkeit ausreichend ist. Ist Wasser im System vorhanden, kommt es durch Hydrolyse des Phosphortrichlorids zur Bildung von Phosphoriger Säure, welche schlussendlich zur Bildung und Anreicherung von weißem Phosphor in der Anlage führt.

Beim erfindungsgemäßen kontinuierlichen Herstellungsverfahren handelt es sich um ein geschlossenes System, das dadurch sehr gut gegen das Eindringen von Feuchtigkeit geschützt ist. Nur beim erstmaligen Anfahren der Anlage muss beim Dosieren der Edukte und des Katalysators besonders auf die Inertisierung geachtet werden. Beim Batch-Verfahren ist dies jedoch bei jedem Ansatz von neuem nötig.

Kontinuierliche Verfahren haben zudem gegenüber Batch-Verfahren Vorteile bei den Kosten für Erstellung, Energie und Personal.

Das erfindungsgemäße Verfahren, wie vorstehend beschrieben, hat sich insbesondere zur Herstellung von DOPO, d.h. einer organischen Phosphorverbindung der allgemeinen Formel I bewährt, bei der $y_1$ und $y_2$ Wasserstoff ist.

Die Erfindung betrifft weiterhin eine Organophosphorverbindung der allgemeinen Formel I, worin die in der Formel I angegebenen Reste die vorstehend angegebene Bedeutung besitzen, das durch ein Verfahren, wie vorstehend beschrieben, herstellbar ist.

Die Organophosphorverbindung der allgemeinen Formel I ist insbesondere als Flammschutzmittel geeignet, insbesondere für Epoxidharze und den speziellen Anwendungsfall der Halbleiterindustrie.

Die Erfindung wird nachfolgend anhand der Figuren 1 bis 3 näher beschrieben.

Figur 1 zeigt die chemische Strukturformel wie auch den exakten chemischen Namen der organischen Phosphorverbindung nach der Erfindung für den Fall, dass $y_1$ und $y_2$ Wasserstoff ist. Diese Verbindung ist im Stand der Technik als DOPO bekannt geworden.

Figur 2 zeigt den chemischen Ablauf der Stufen 1 bis 4 anhand des Beispiels DOPO.

Figur 3 zeigt schematisch das erfindungsgemäße, kontinuierliche Herstellungsverfahren von DOPO.

## Patentansprüche

**1.** Verfahren zur Herstellung von Organophosphorverbindungen der allgemeinen Formel I

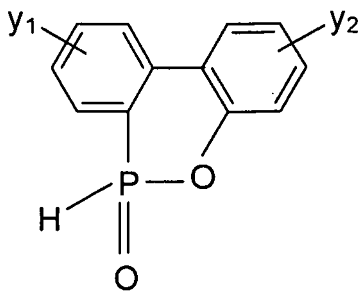

(I)

worin $y_1$ und $y_2$, die gleich oder unterschiedlich sein können, Wasserstoff- oder Halogenatome, Alkylgruppen mit $C_1$ bis $C_{18}$, Alkoxygruppen mit $C_1$ bis $C_{18}$, Arylgruppen, Aryloxygruppen, Acylgruppen, Nitrogruppen, Cyanogruppen oder Sulfonsäuregruppen sein können, wobei die Reste $y_1$ und $y_2$ zusammen mit dem Biphenylring auch einen Phenanthrenring bilden können, durch Veresterung von Phosphortrihalogeniden der allgemeinen Formel III

$$PX_3 \qquad (III),$$

worin X ein Halogenatom ist,
mit O-Phenylphenolen der allgemeinen Formel IV

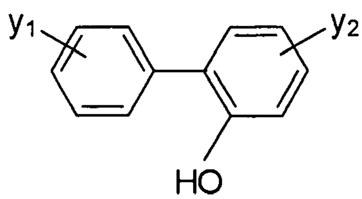

(IV)

worin die Reste $y_1$ und $y_2$ die vorstehend genannte Bedeutung besitzen,
in Gegenwart eines Katalysators und anschließender Hydrolyse,
**dadurch gekennzeichnet,**
**dass** das Herstellungsverfahren kontinuierlich durchgeführt wird, wobei mindestens die nachfolgenden Stufen, unter Schutzgas, nacheinander durchlaufen werden:

Stufe 1 Veresterung des O-Phenylphenols der allgemeinen Formel IV mit einem Überschuss an $PX_3$ der allgemeinen Formel (III)
Stufe 2 Cyclisierung des Produkts aus der Stufe 1 mit einem Katalysator, und
Stufe 3 Hydrolyse des Produkts aus der Stufe 2.

**2.** Verfahren nach Anspruch 1,
**dadurch gekennzeichnet, dass** 1,1 bis 3 mol $PX_3$ auf ein Mol des O-Phenylphenols der allgemeinen Formel IV eingesetzt werden.

**3.** Verfahren nach einem der Ansprüche 1 oder 2,
**dadurch gekennzeichnet, dass** der Katalysator in der Stufe 1 und/oder in der Stufe 2 zugegeben wird.

**4.** Verfahren nach mindestens einem der Ansprüche 1 bis 3,
**dadurch gekennzeichnet, dass** die Cyclisierung der Stufe 2 bei Temperaturen > 140 °C durchgeführt wird.

**5.** Verfahren nach einem der Ansprüche 1 bis 4,
**dadurch gekennzeichnet, dass** vor der Stufe 2 (Cyclisierung) $PX_3$ zur Verschiebung des Gleichgewichts in Richtung der Reaktionsprodukte der Stufe 2 zugegeben und/oder der Halogenwasserstoff entfernt wird.

**6.** Verfahren nach mindestens einem der Ansprüche 2 bis 5,
**dadurch gekennzeichnet, dass** das überschüssige $PX_3$ und/oder nicht vollständig umgesetzte Edukte aus der Stufe 1 und/oder Stufe 2 abgetrennt und zu den Edukten in die Stufe 1 und/oder Stufe 2 rückgeführt werden.

**7.** Verfahren nach Anspruch 6,
**dadurch gekennzeichnet, dass** die Abtrennung durch Destillation erfolgt.

**8.** Verfahren nach mindestens einem der Ansprüche 1 bis 7,
**dadurch gekennzeichnet, dass** das Reaktionsprodukt der Stufe 2 in der Schmelze gehalten und in die Stufe 3 im schmelzflüssigen Zustand überführt wird.

**9.** Verfahren nach mindestens einem der Ansprüche 1 bis 8,
**dadurch gekennzeichnet, dass** die Hydrolyse (Stufe 3) in geschmolzenem Zustand bei Temperaturen von 80 bis 100 °C durchgeführt wird.

**10.** Verfahren nach Anspruch 9,
**dadurch gekennzeichnet, dass** soviel Wasser eingesetzt wird, dass sich ein zweiphasiges Gemisch ausbildet, wobei die untere Phase das geschmolzene Produkt und die obere Phase den abgespaltenen Halogenwasserstoff ($H_X$) enthält.

**11.** Verfahren nach einem der Ansprüche 1 bis 10,
**dadurch gekennzeichnet, dass** nach der Hydrolyse ein Austrag des Produkts und eine Trocknung erfolgt.

**12.** Verfahren nach einem der Ansprüche 1 bis 11,
**dadurch gekennzeichnet, dass** nicht umgesetzter Katalysator zu den Edukten in die Stufe 1 und/oder Stufe 2 rückgeführt wird.

**13.** Verfahren nach mindestens einem der Ansprüche 1 bis 12,
**dadurch gekennzeichnet, dass** die organische Phosphorverbindung der allgemeinen Formel I aufgereinigt wird.

**14.** Verfahren nach Anspruch 13,
**dadurch gekennzeichnet, dass** die Aufreinigung durch Umkristallisation erfolgt.

**15.** Verfahren nach mindestens einem der Ansprüche 1 bis 14,
**dadurch gekennzeichnet, dass** in der allgemeinen Formel I $y_{1,2}$ Wasserstoff ist.

**16.** Verfahren nach einem der Ansprüche 1 bis 15,
**dadurch gekennzeichnet, dass** der Katalysator eine Lewis-Säure ist, bevorzugt $ZnCl_2$ ist.

**17.** Organophosphorverbindungen der allgemeinen Formel I

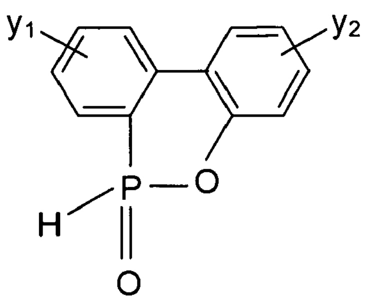

(I)

worin $y_1$ und $y_2$ die in Anspruch 1 angegebene Bedeutung besitzen, herstellbar durch ein verfahren nach mindestens einem der Ansprüche 1 bis 16.

**18.** Verwendung der mit einem Verfahren nach den Ansprüchen 1 bis 16 hergestellten Organophosphorverbindung als

Flammschutzmittel.

**19.** Verwendung nach Anspruch 18,
**dadurch gekennzeichnet, dass** die Organophosphorverbindung der allgemeinen Formel I in Epoxidharzen eingesetzt wird.

Figur 1

# DOPO

**9,10-dihydro-9-oxa-10-phosphaphenanthrene-10-oxide**

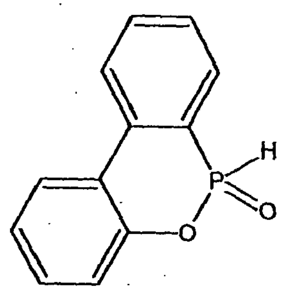

Figur 2

# Herstellprozess DOPO

Stufe 1

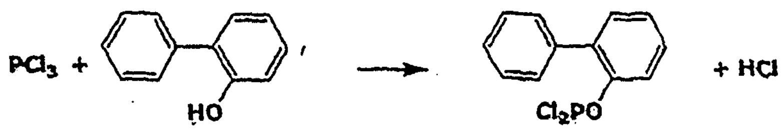

Stufe 2

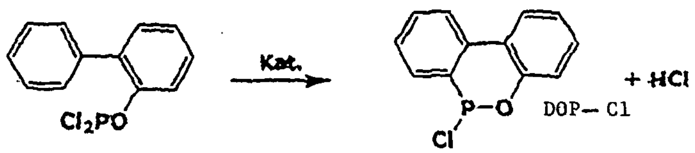


Stufe 3

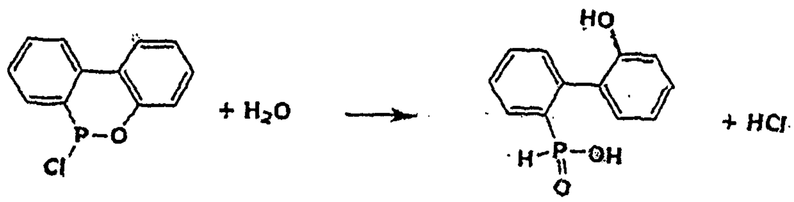

Stufe 4

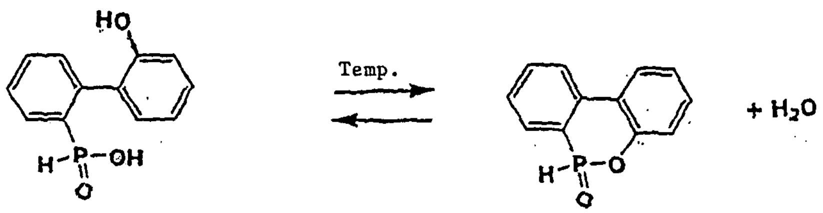

Figur 3

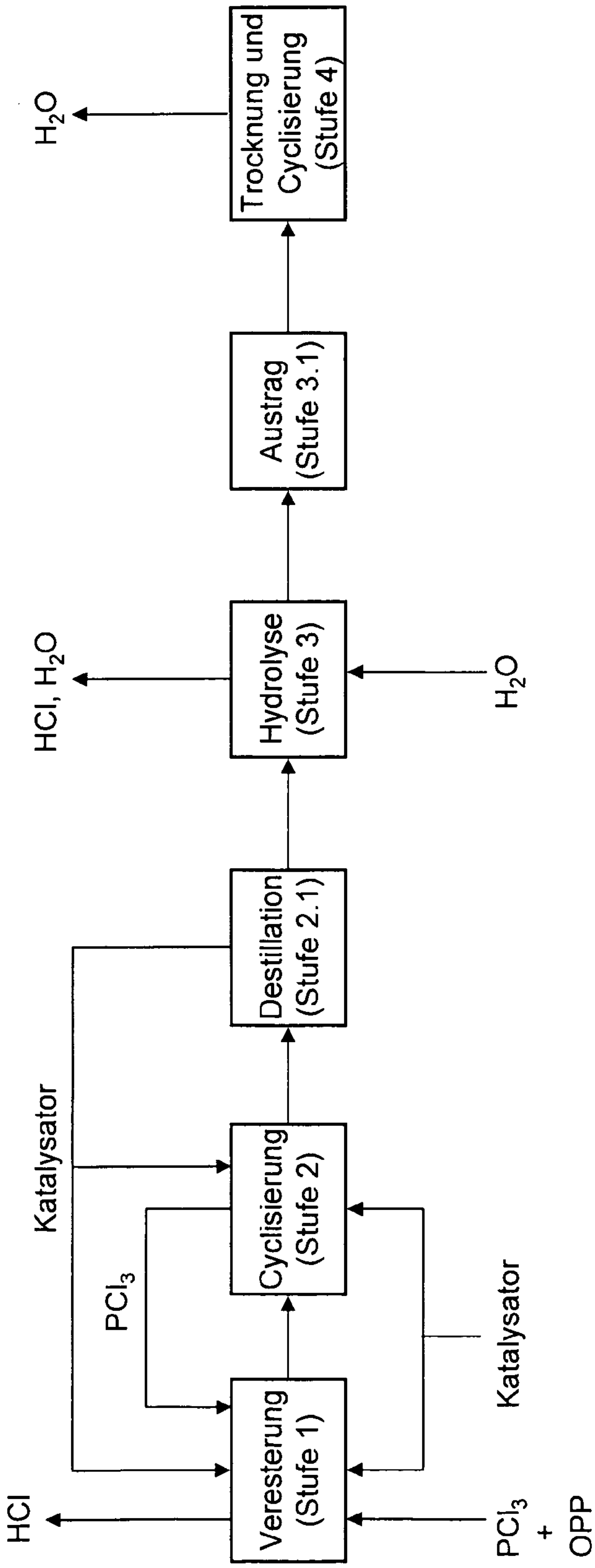
HCl
Veresterung (Stufe 1)
$PCl_3$ + OPP
$PCl_3$
Katalysator
Cyclisierung (Stufe 2)
Katalysator
Destillation (Stufe 2.1)
HCl, $H_2O$
Hydrolyse (Stufe 3)
$H_2O$
Austrag (Stufe 3.1)
$H_2O$
Trocknung und Cyclisierung (Stufe 4)

Europäisches Patentamt

# EUROPÄISCHER RECHERCHENBERICHT

Nummer der Anmeldung
EP 07 02 1015

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 739 896 A (BAYER AG [DE]) 30. Oktober 1996 (1996-10-30) * Seite 5, Zeile 11 - Zeile 13; Anspruch 1; Beispiel 1 * | 1-10,16, 17 | INV. C07F9/6574 |
| X | * Anspruch 4 * | 15 | |
| X | * Seite 2, Zeile 9 - Zeile 10 * ----- | 18 | |
| A | DE 27 30 371 A1 (SANKO KAIHATSU KAGAKU KENK [JP]; ASAHI DOW LTD [JP]) 12. Januar 1978 (1978-01-12) * Seite 9 - Seite 10; Beispiel 1 * ----- | 1-19 | |
| X | US 6 291 627 B1 (WANG CHUN-SHAN [TW] ET AL) 18. September 2001 (2001-09-18) * Spalte 4 * ----- | 19 | |

RECHERCHIERTE SACHGEBIETE (IPC)
C07F

Der vorliegende Recherchenbericht wurde für alle Patentansprüche erstellt

| Recherchenort | Abschlußdatum der Recherche | Prüfer |
|---|---|---|
| München | 4. April 2008 | Richter, Herbert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 07 02 1015

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2008

| Im Recherchenbericht angeführtes Patentdokument | Datum der Veröffentlichung | Mitglied(er) der Patentfamilie | Datum der Veröffentlichung |
|---|---|---|---|
| EP 0739896 A | 30-10-1996 | CA 2174603 A1 | 25-10-1996 |
| | | DE 19514946 A1 | 31-10-1996 |
| | | JP 8291189 A | 05-11-1996 |
| | | US 5717127 A | 10-02-1998 |
| DE 2730371 A1 | 12-01-1978 | CA 1065864 A1 | 06-11-1979 |
| | | FR 2357572 A1 | 03-02-1978 |
| | | GB 1547105 A | 06-06-1979 |
| | | NL 7707412 A | 09-01-1978 |
| | | US 4086206 A | 25-04-1978 |
| US 6291627 B1 | 18-09-2001 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 5017979 B
- JP 59222496 A